# FASCICULE DE BREVET EUROPEEN

(11) **EP 2 091 345 B1**
(45) Date de publication et mention de la délivrance du brevet: **19.01.2011**
(21) Numéro de dépôt: 07822641.2
(22) Date de dépôt: 15.11.2007
(51) Int. Cl.: A23G 1/00, A23L 1/212, A23L 1/27, A23G 1/48, A23G 1/30

(54) **CHOCOLAT AUX FRUITS OU ANALOGUE**
FRUCHTHALTIGE SCHOKOLADE ODER ÄHNLICHES
FRUIT-CONTAINING CHOCOLATE OR THE LIKE

(30) Priorité: 16.11.2006 FR 0610023
(43) Date de publication de la demande: 26.08.2009
(73) Titulaire: Compagnie Gervais Danone, 75009 Paris (FR)
(72) Inventeur: RABAULT, Jean-Luc, 91650 Breuillet (FR); LAMBERT, Flavien, 92140 Clamart (FR); DUGRE, Eric, 75012 Paris (FR)
(74) Mandataire: Warcoin, Jacques
(86) Numéro de dépôt international: PCT/EP2007/062403
(87) Numéro de publication internationale: WO 2008/059022

(56) Documents cités:
- FR-A1- 2 471 144
- GB-A- 847 340
- GB-A- 2 381 433
- US-A- 5 958 503
- DATABASE WPI Week 200438 Derwent Publications Ltd., London, GB; AN 2004-407151 XP002435897 & KR 200 409 286 A (LOTTE CONFECTIONERY CO LTD) 31 janvier 2004 (2004-01-31)

## Description

La présente invention concerne des chocolats ou analogues aromatisés aux fruits, c'est à dire ayant un goût et une couleur de fruits "naturels", peu collants (à la différence des confitures), tout en ayant une bonne composition nutritionnelle.

La plupart des tablettes de chocolat aux fruits contiennent de gros morceaux de fruits, de plus souvent associés à des fruits secs (amandes, noisette) ou uniquement des arômes de fruits. Tous ces chocolats incluant des parties de fruits ou des arômes de fruits gardent une apparence classique de chocolat noir, ou chocolat au lait ou blanc et n'ont donc pas la couleur naturelle du fruit. Leur goût est en général assez cacaoté et ces chocolats n'ont donc pas le goût naturel des fruits.

Il existe également des chocolats blancs ou des pâtes à glacer colorées et aromatisées aux fruits. Mais ils sont faits avec des additifs colorants et des arômes, ce qui donne une image bas de gamme, artificielle, et un mauvais rendu des couleurs et des arômes de fruits.

La demande de brevet FR 2 471 144 décrit la fabrication d'un chocolat contenant de la poudre de fruits. Toutefois, la teneur en eau des fruits utilisés est assez importante (fruit confits ou séchés au soleil ayant au maximum 35% en poids d'eau; ou 25% en poids d'eau. Ainsi les raisins de Corinthe secs ou les dattes sèches contiennent par exemple 19% d'eau en poids) et/ou les fruits n'ont pas le goût naturel des fruits car ils sont trop sucrés (fruits confits). Il est en outre indiqué dans ce brevet que de tels fruits contiennent moins d'eau que les fruits frais mais encore des quantités importantes d'eau par rapport au chocolat. C'est pour cela que le procédé d'incorporation de ces fruits dans le chocolat est très compliqué. En effet, il est bien connu que l'apport de petites quantités d'eau dans le chocolat entraîne une augmentation de viscosité très forte voire la prise en masse du chocolat. En outre l'utilisation de fruits confits est compliquée en raison de leur caractère collant.

La poudre de fruits semble être un bon candidat pour aromatiser et colorer les chocolats et analogues, à condition qu'elle n'apporte que très peu d'eau. Toutefois, même secs, les fruits peuvent poser les problèmes suivants :
- Augmentation de la viscosité et de la limite d'écoulement, notamment lié au fait que les fruits se réduisent en une poudre très fine lors du procédé et au fait que la poudre de fruits est très hygroscopique.
- Problème de stabilité de la couleur, notamment pour les Aw élevées, en particulier supérieure à 0,88, du milieu composé qui sera au contact des chocolats ou analogues. Au contraire, les additifs colorants généralement utilisés dans les chocolats blancs sont insolubles dans l'eau, donc stables en milieu humide.

Or les inventeurs ont découvert de façon surprenante qu'il est possible d'aromatiser des chocolats en utilisant des poudres de fruits « naturels » tout en conférant au chocolat la couleur naturelle des fruits, en conservant de bonnes propriétés nutritionnelles au chocolat (pas trop de sucre ou de matière grasse, pas d'additifs artificiels tels que arôme ou colorant) et en utilisant un procédé de fabrication très simple, c'est à dire sans les problèmes de l'art antérieur.

La présente invention concerne donc un chocolat aux fruits ou analogue comprenant au moins un agent sucrant, moins de 3 % en poids de cacao sec non gras par rapport au poids total du chocolat ou analogue, avantageusement moins de 1 % en poids, entre 24 et 50 % en poids de matière grasse par rapport au poids total du chocolat ou analogue et entre 1 et 20 % en poids d'une poudre de fruits par rapport au poids total du chocolat ou analogue, la poudre de fruits ayant un D₉₀ inférieur à 500 µm et une teneur en eau inférieure à 5 % en poids par rapport au poids total de la poudre de fruits.

Au sens de la présente invention, on entend par « chocolat » toute suspension concentrée de particules solides dans une phase grasse continue, qui n'est pas une émulsion eau dans huile. La définition du chocolat est en particulier donnée par la Directive communautaire 2000/36/CE. Préférentiellement le chocolat contient comme matière grasse uniquement du beurre de cacao, et/ou de la MGLA (Matière Grasse Laitière Anhydre) et/ou de l'huile de 'noisette et/ou d'amande et/ou des émulsifiants. Toutefois, il peut en outre contenir, en mélange avec le beurre de cacao d'autres matières grasses autorisées dans la Directive communautaire 2000/36/CE. Les chocolats peuvent avoir une texture très croquante à 20°C (par exemple, s'ils ne contiennent que du beurre de cacao) ou assez molle (par exemple s'ils contiennent une proportion importante de MGLA ou surtout d'huile de noisette).

Au sens de la présente invention on entend par « analogue du chocolat » toute suspension concentrée de particules solides dans une phase grasse continue ayant une SFC_{20°C} (Solid Fat Content mesuré à 20°C) supérieure ou égale à 50% et qui n'est pas une émulsion eau dans huile, mais qui ne répond pas à la définition du chocolat. L'analogue peut en effet contenir des ingrédients qui, selon la Directive communautaire 2000/36/CE, ne sont pas autorisés dans un chocolat, tel que par exemple, de l'amidon ou certaines MG (Matières Grasses) végétales. Il peut s'agir par exemple de matière grasse laurique hydrogénée, éventuellement fractionnée. L'analogue peut aussi contenir des ingrédients autorisés dans le chocolat, mais à des doses non admises pour le chocolat (par exemple plus de 5% de MG végétales autres que le beurre de cacao). Ces analogues du chocolat sont généralement appelés en français « pâte à glacer », et en anglais « chocolate compound » ou « compound ».

Ceci lui confère une texture proche des chocolats.

Dans le reste de la demande, le terme « chocolat » englobe les analogues de chocolat et le chocolat, sauf spécifié autrement.

Avantageusement la teneur en matière grasse du chocolat selon la présente invention est comprise entre 27 et 45% en poids par rapport au poids total du chocolat, de façon avantageuse, entre 27 et 38% en poids par rapport au poids total du chocolat.

Dans un mode de réalisation particulier, lorsque le chocolat selon la présente invention est destiné à être en contact avec un milieu alimentaire humide (tel que base laitière, yaourt, mousse etc..) ayant une Aw supérieure à 0,88, la teneur en matière grasse du chocolat selon la présente invention est comprise entre 32 et 50% en poids par rapport au poids total du chocolat, avantageusement entre 32 et 45% en poids par rapport au poids total du chocolat, de façon avantageuse entre 32 et 38% en poids par rapport au poids total du chocolat, de façon encore plus avantageuse entre 35 et 38% en poids par rapport au poids total du chocolat. Dans un mode de réalisation particulier, lorsque le chocolat selon la présente invention est destiné à être en contact avec un milieu alimentaire humide (tels que base laitière, fourrage sucré au yaourt, etc..) ayant une Aw inférieure ou égale à 0,88, avantageusement inférieure ou égale à 0,85, la teneur en matière grasse du chocolat selon la présente invention est comprise entre 28 et 38% en poids par rapport au poids total du chocolat, avantageusement entre 30 et 35% en poids par rapport au poids total du chocolat, de façon avantageuse entre 30 et 33% en poids par rapport au poids total du chocolat.

La teneur en matière grasse est donc adaptée à l'Aw du produit en contact avec le chocolat selon la présente invention, à la durée / température de stockage et à l'épaisseur du chocolat. En effet pour les utilisation du chocolat au contact d'un milieu alimentaire humide, notamment dans le cas d'enrobages de barres fraîches (c'est à dire de barres ayant un fourrage humide avec une Aw de 0,78-0,96, avantageusement de 0,8 à 0,93, de façon avantageuse de 0,88 à 0,92 et conservées au réfrigérateur, avantageusement entre 1 et 10°C, de façon avantageuse pendant au moins 10 jours, de façon encore plus avantageuse pendant au moins 30 jours), le chocolat selon la présente invention doit aussi résister à l'eau (pas de ramollissement excessif ni de changement de couleur).

Or une teneur en matière grasse (MG) suffisament élevée permet au chocolat de garder son croquant et d'éviter une trop grande migration de l'eau du milieu alimentaire humide vers le chocolat. Cette migration est plus rapide si l'épaisseur du chocolat est plus faible ou si la température de stockage est plus élevée.

La nature de la MG sera aussi adaptée dans le cas d'utilisation en milieu à haute Aw : la MG solide (mesurée par la SFC à la température de stockage) est plus efficace contre la migration d'eau que les huiles liquides. De préférence, on utilisera alors des MG de type beurre de cacao ou des MG végétales hydrogénées et/ou fractionnées. Ces phénomènes de migration d'eau et les formulations résistantes sont déjà détaillés dans les demandes de brevets WO 00/07456 et FR 9906481.

Au sens de la présente invention on entend par « agent sucrant », tout sucre (mono et disaccharides), sirops de glucose et / ou fructose, maltodextrines, polyols et édulcorants intenses. Parmi les monosaccharides on cite le fructose, le galactose, le glucose. Parmi les disaccharides, on cite notamment le saccharose qui est le sucre couramment utilisé pour la réalisation de chocolat, mais le saccharose peut être remplacé partiellement ou totalement par un autre disaccharide tel que le lactose, par exemple à hauteur de 0 à 50% en poids, ou par des polyols tels que par exemple le mannitol et le maltitol. La variante préférée est cependant le saccharose.

Avantageusement, la quantité d'agent sucrant du chocolat selon la présente invention est compris entre 1 et 55% en poids par rapport au poids total du chocolat, plus avantageusement entre 10 et 50% en poids par rapport au poids total du chocolat, encore plus avantageusement entre 10 et 45 % en poids par rapport au poids total du chocolat, de façon avantageuse entre 20 et 40% en poids par rapport au poids total du chocolat, de façon plus avantageuse entre 20 et 33% en poids par rapport au poids total du chocolat.

Au sens de la présente invention on entend par « fruit », tout fruit « naturel » hors fruits à coque (noix, noisettes, amandes, cajou, pécan...). Sont exclus les fruits confits. Il s'agit par exemple de fruits rouges tels que fraise, framboise, myrtille ou mures, de fruits exotiques tels que ananas, mangue ou kiwi, de melon, de pêche, d'abricot, de banane, de cerises, de pommes, de poires, d'agrumes tels que orange, citron, pamplemousse ou clémentine, de raisin, de prunes, de mirabelles, de figues. Avantageusement, il s'agit de fruits rouges.

Au sens de la présente invention on entend par « poudre de fruits » tout fruit tel que défini ci-dessus, séché et réduit en poudre et dont la teneur en eau est inférieure à 5% en poids par rapport au poids total de la poudre de fruits, de façon plus avantageuse inférieure à 3,5% en poids par rapport au poids total de la poudre de fruits, encore plus avantageusement inférieure à 2% en poids par rapport au poids total de la poudre de fruits. La poudre de fruits se distingue des morceaux de fruits par une granulométrie plus fine. Ainsi son D₉₀ est < 500µm, avantageusement < 250µm, de façon avantageuse < 120 µm, de façon encore plus avantageuse < 60µm. Sont aussi exclues les purées de fruits, car elles contiennent une teneur en eau >5% en poids. Bien évidement, la poudre de fruits peut être obtenue par séchage de la totalité de la partie comestible, ou par séchage d'une partie seulement de la partie commestible, par exemple le jus ou la pulpe (résidu après extraction du jus). Avantageusement, l'invention utilisera la totalité de la partie comestible.

Le D₉₀ est le diamètre en dessous duquel se trouvent 90% du volume de toutes les particules d'une poudre.

Avantageusement la poudre de fruits est totalement déshydratée. De façon avantageuse, les fruits de la poudre sont sous forme lyophilisée ce qui donne une note aromatique et une couleur plus fortes et plus naturelles au produit final.

De façon avantageuse, la quantité de poudre de fruits du chocolat selon la présente invention est comprise entre 2 et 15% en poids par rapport au poids total du chocolat, avantageusement entre 4 et 10% en poids par rapport au poids total du chocolat, encore plus avantageusement entre 5 et 8% en poids par rapport au poids total du chocolat.

Au sens de la présente invention on entend par «Equivalent fruits » la matière sèche (MS) du fruit mise en oeuvre / MS du fruit à l'état naturel.

Par exemple : la fraise naturelle a 10% de MS et 90% d'eau. Employer 5,15% d'une poudre de fraise à 3% d'eau, c'est-à-dire ayant 97% de MS de fruits dans un produit fini donne un équivalent fruits de 97/10*5,15% = 50%.

Ainsi avantageusement le chocolat selon la présente invention contient un équivalent fruit supérieur à 20%, de façon avantageuse supérieur à 40%, et même supérieur à 80%.

La teneur en cacao sec non gras faible ou nulle du chocolat selon la présente invention permet d'éviter la coloration du chocolat en marron afin que ce dernier puisse être uniquement coloré par la présence de la poudre de fruits et de façon moins avantageuse à l'aide d'un colorant. Le chocolat selon la présente invention a ainsi la couleur « naturelle » du fruit qui le parfume.

De façon avantageuse, l'Aw à 25°C du chocolat selon la présente invention est inférieure à 0,60, de préférence inférieure à 0,50 et avantageusement inférieure à 0,35.

L'activité de l'eau d'un produit est une notion qui est bien connue dans le domaine alimentaire, cette grandeur, en abrégé Aw, mesure la disponibilité de l'eau dans un échantillon. Dans la plupart des cas, cette activité de l'eau n'est pas proportionnelle à la teneur en eau du produit.

Les méthodes permettant la mesure de l'Aw d'un produit sont connues de l'homme du métier. Pour les chocolats et analogues, qui sont assez imperméables à l'eau, la méthode de mesure selon l'invention est de découper le chocolat en poudre (afin d'exposer une grande surface) et mesurer l'Aw à 25 +/-2°C au Novasina^{™}, appareil qui laisse assez de temps (24h) pour l'équilibrage de l'eau entre l'échantillon et l'air.

Dans un mode de réalisation particulier, le chocolat selon la présente invention, contient en outre entre 1 et 40 % en poids d'amidon sec par rapport au poids total du chocolat, avantageusement entre 5 et 30% en poids par rapport au poids total du chocolat, de façon avantageuse entre 13 et 22 % en poids par rapport au poids total du chocolat.

Au sens de la présente invention on entend par « amidon sec » de l'amidon qui ne contient pas d'eau et qui a donc été totalement séché. L'amidon sec selon la présente invention est avantageusement ajouté sous forme d'amidon natif et/ou surséché non gélatinisé, éventuellement thermisé pour abaisser sa charge microbienne.

L'homme de l'art connait différentes techniques pour reconnaître l'amidon non gélatinisé ; la plus simple est l'observation au microscope en lumière polarisée : les grains non gélatinisés apparaissent sous forme de "croix de malte" (bi-réfringence), alors que les grains gélatinisés perdent cette caractéristique.

Il est ainsi possible dans le cadre de la présente invention de remplacer une partie importante des sucres traditionnellement présents dans le chocolat par de l'amidon natif ou physiquement modifié sans altérer la saveur sucrée du produit. Cet ajout d'amidon permet aussi de réduire sensiblement la teneur en matières grasses du chocolat selon l'invention.

A la différence des sucres, l'amidon n'est pas sucré et ne fond pas en bouche et il est donc surprenant que le chocolat selon l'invention, présente des caractéristiques organoleptiques semblables, voire meilleures, que les produits conventionnels. On peut utiliser tout type d'amidon, et notamment l'amidon de blé, l'amidon de maïs, l'amidon de maïs waxy, l'amidon de tapioca, l'amidon de riz, l'amidon de pomme de terre, ou leurs mélanges.

Avantageusement, on utilise de l'amidon natif, c'est-à-dire non gélatinisé et cet amidon ne sera pas gélatinisé lors du procédé ultérieur. Contrairement aux sirops de glucose, aux maltodextrines et aux protéines, l'amidon natif absorbe très peu la salive dans la bouche et n'augmente donc pas le collant du chocolat. De plus, l'amidon natif étant un produit naturel non modifié, il ne fait pas partie des additifs alimentaires, qui doivent être signalés en tant que tels sur l'emballage du produit commercialisé.

En outre, l'amidon natif ne présente pas d'inconvénients digestifs, contrairement aux polyols qui ont un effet laxatif, ce qui est particulièrement indésirable dans des produits qui sont destinés aux enfants. Le fait qu'il soit non cuit rend l'amidon natif lentement digestible, ce qui permet de réduire l'index glycémique du chocolat selon la présente invention. Ainsi l'ajout d'amidon natif dans le chocolat selon l'invention entraîne comme effet supplémentaire une sensation de satiété prolongée par rapport aux chocolats classiques. En outre, la densité de l'amidon natif est élevée et ses granules ne présentent pas une porosité accessible à la matière grasse. Cette absence de porosité accessible est importante afin de ne pas augmenter la viscosité du chocolat suite à une inclusion de matière grasse dans les pores.

La granulométrie des granules d'amidons natifs, qui est généralement comprise entre 2 µm et 100 µm, et plus généralement entre 5 µm et 45 µm, est également idéale pour une utilisation dans le chocolat selon l'invention. Ainsi les amidons natifs ne comprennent ni trop de particules fines, ni trop de grosses particules. La présence de particules fines augmente la viscosité du chocolat et nécessite donc d'augmenter la teneur en matières grasses. A l'inverse, la présence de grosses particules confère au chocolat une sensation sableuse dans la bouche. L'équilibre entre granules de petite taille et de grande taille peut, en tant que de besoin, être ajusté en fonction des textures et propriétés recherchées, en mélangeant, en différentes proportions, des amidons de diverses provenances.

Dans un mode de réalisation avantageux, la taille de particules de l'amidon est pour au moins 90% des particules comprise entre 2 µm et 100 µm, de préférence entre 5 µm et 45 µm.

Parmi les amidons natifs, on préfère l'amidon de blé, car il présente une granulométrie idéale de 2 µm à 45 µm, et car c'est un constituant naturel dans les produits de cuisson céréaliers, qui sont principalement à base de farine de blé, d'ailleurs souvent mélangée à de l'amidon de blé.

Les amidons de maïs et de manioc font aussi partie des amidons préférés de par leur granulométrie.

D'autres avantages de l'amidon natif sont sa saveur neutre et sa couleur blanche, ce qui permet au chocolat selon la présente invention de prendre le goût et la couleur de la poudre de fruits. Enfin, l'amidon natif est un ingrédient bon marché ; et il peut souvent être employé sans broyage dans le chocolat selon l'invention, ce qui permet un procédé de fabrication simplifié et une plus grande productivité. Outre l'amidon natif, on peut également utiliser conformément à l'invention des amidons surséchés, c'est-à-dire des amidons, non cuits, dont la teneur en humidité a été amenée en dessous de leur humidité relative d'équilibre. On peut également envisager l'utilisation d'un mélange d'amidons natifs et d'amidons surséchés ou de différents types d'amidons surséchés.

L'amidon natif de blé contient environ 13% d'eau et 87% d'amidon nutriment. Au sens de l'invention, on parle d'amidon sec pour éviter toute confusion, car l'amidon sec = amidon nutriment. On peut donc apporter selon l'invention jusqu'à 40% en poids d'amidon sec, soit une teneur en amidon de blé natif d'environ 46% en poids.

Dans certains chocolats selon l'invention, tout ou partie de l'amidon peut être amenée sous forme de farine native non gélatinisée riche en amidon, par exemple une farine de céréale, telle que la farine de blé, de riz, de maïs. La farine de blé peut être assimilée à un mélange de 12 % en poids de protéines, 83 % d'amidon à 13 % d'eau, de 1 % de matières grasses et de 4% de fibres. Eventuellement, cette farine peut être surséchée et/ou elle peut être thermisée (pour abaisser sa charge microbienne). On comprend par une farine thermisée une farine qui a été soumise à un traitement thermique pour abaisser sa charge microbienne, sans que son amidon soit gélatinisé. De préférence, ces farines non gélatinisées sont des farines de céréale.

L'amidon seul est cependant la version préférée par rapport à la version contenant de la farine seule ou de la farine et de l'amidon, car cela donne des produits un peu moins collants en bouche et un peu plus neutres en goût.

Il n'était pas évident de pouvoir utiliser un amidon (ou une farine) non surséché car l'amidon contient de l'eau, généralement de 13% à 20%, ce qui fait que l'introduction, dans une formulation, de 15% d'amidon de blé par exemple (contenant 13% d'eau) apporte environ 2% d'eau dans la formulation. Or, il est bien connu que l'addition d'une telle quantité d'eau directement sous forme libre, ou sous forme d'un miel ou d'un sirop de sucre par exemple, provoque la "solidification" du chocolat, et entraîne des risques de saponification en présence de MG lauriques notamment (très souvent utilisées dans les analogues de chocolat). De façon surprenante et inattendue, aucun de ces problèmes n'est rencontré lors de l'utilisation, conformément à l'invention, d'un amidon ou d'une farine dans le chocolat selon l'invention.

Comme indiqué précédemment, l'ajout d'amidon dans le chocolat selon l'invention permet en outre de réduire la teneur en sucres et en matières grasses du chocolat.

Dans un autre mode de réalisation, le chocolat selon l'invention contient en outre de la poudre de lait et/ou de dérivés laitiers à une teneur comprise entre 5 et 40 % en poids par rapport au poids total du chocolat, avantageusement entre 10 et .35% en poids par rapport au poids total du chocolat, de façon avantageuse entre 15 et 30 % en poids par rapport au poids total du chocolat.

Au sens de la présente invention, on entend par « dérivés laitiers en poudre » tout produit issus du lait et se présentant sous forme de poudre (exemples non limitatifs : poudre de lait écrémé ou non, lactosérum, lactose, babeurre, caséinates, concentrés de protéines totales ou sériques...). La MGLA apportée seule n'est pas incluse, par contre la MG de lait apportée via une poudre de lait entière est comprise dans cette définition. Par extension, on inclut aussi la matière sèche du lait apporté sous forme liquide et séché au cours du procédé de fabrication du chocolat selon la présente invention.

Les dérivées laitiers apportent du lactose (sucre), mais aussi des nutriments intéressants comme les protéines et le calcium.

Avantageusement la teneur en (poudre de lait + dérivés laitiers en poudre + amidon sec) du chocolat selon l'invention est supérieure à 25 % en poids par rapport au poids total du chocolat, avantageusement supérieure à 35% en poids par rapport au poids total du chocolat, de façon avantageuse supérieure à 40 % en poids par rapport au poids total du chocolat.

Ces teneurs permettent pour des raisons nutritionnelles de diminuer les quantités d'agent sucrant du chocolat selon l'invention tout en assurant la fonction "agent de charge" qu'assurent généralement les sucres.

Par ailleurs, il n'est pas évident d'augmenter fortement la teneur en protéines de lait dans le chocolat, notamment à cause d'une augmentation de viscosité / limite d'écoulement pendant le stockage liquide (MG fondue), et ce d'autant plus que la température de stockage est élevée et d'autant plus que la teneur en eau du chocolat augmente ou que la teneur en MG diminue. Ceci est bien connu de l'homme de l'art chocolatier. D'où l'intérêt d'agents de charge comme l'amidon ou les fibres.

Il n'était donc pas évident de combiner à la fois une quantité de poudre de lait importante et une quantité significative de poudre de fruits et/ ou d'amidon. En effet:
- l'amidon apporte une grande quantité d'eau (mais les inventeurs ont découvert que celle-ci est très liée, ce qui explique qu'elle ne pose pas de problème)
- pour préserver intégralement la couleur et l'arôme des fruits, il est préférable de ne pas chauffer le chocolat au dessus de 55°C, de préférence au dessus de 45°C, ce qui limite la possibilité d'évaporation de l'eau qui se produit normalement lors du conchage.
- les poudres de fruit et de lait augmentent la viscosité du chocolat.

De façon avantageuse, le chocolat selon l'invention contient en outre au moins un émulsifiant, avantageusement choisi parmi la lécithine, le PGPR ou le phosphatide d'ammonium. Dans une certaine plage, la viscosité du chocolat est ajustée par la teneur en MG et/ou par l'ajout d'émulsifiants (bien connu de l'homme de l'art). Avantageusement, l'émulsifiant est présent en une quantité < 1% en poids par rapport au poids total du chocolat selon l'invention, de façon avantageuse dans le cas du PGPR < 0,5% en poids par rapport au poids total du chocolat selon l'invention.

Avantageusement, le chocolat selon l'invention contient plus de 120 mg de calcium élément pour 100 g de chocolat, avantageusement plus de 400 mg pour 100 g de chocolat et de préférence plus de 1000 mg pour 100 g de chocolat. Le calcium peut provenir de la poudre de lait ou de dérivés laitiers. On peut aussi renforcer le calcium par un concentré de calcium d'origine laitière ou de préférence un calcium non laitier, qui peut être (non exhaustif) : carbonate de calcium ou citrate de calcium en poudres. Dans ce cas, le chocolat selon l'invention contient une source de calcium autre que le lait ou les dérivés laitiers.

Dans un mode de réalisation particulier, aucun arôme de fruits autre que celui déjà présent naturellement dans la poudre de fruits, n'est ajouté dans le chocolat.

De façon avantageuse, le chocolat ne contient pas d'additifs alimentaires autres que les émulsifiants.

De même avantageusement aucun colorant, autre que celui présent naturellement dans la poudre de fruits, n'est ajouté dans le chocolat selon la présente invention, en particulier lorsque le chocolat selon l'invention est destiné à être employée au contact d'un produit alimentaire d'Aw ≤ 0,88, avantageusement ≤ 0,85. Avantageusement, le chocolat selon la présente invention ne contient pas de colorant considéré comme additif dans la législation européenne selon la directive 94/36/CE du 30/6/94, et portant un code E.

Toutefois, optionnellement, la couleur du chocolat selon la présente invention peut être renforcée par au moins un colorant. C'est en particulier le cas lorsque le chocolat selon l'invention est destiné à être employé au contact d'un produit alimentaire d'Aw > 0,88. En effet, dans ce cas, la couleur du fruit peut s'altérer, notamment s'éclaircir, lors de la migration d'eau dans le chocolat : on ajoute alors de préférence en plus au moins grande quantité un colorant, avantageusement non hydrosoluble pour ne pas qu'il migre vers le produit alimentaire humide au contact duquel se trouve le chocolat selon l'invention.

Avantageusement, la teneur en eau du chocolat selon l'invention est inférieure ou égale à 6 % en poids par rapport au poids total du chocolat. Avantageusement, le chocolat selon l'invention contient moins de 1% en poids par rapport au poids total du chocolat d'eau sous forme de gouttelettes, de préférence moins de 0,2 %. La présente invention concerne en outre un procédé de fabrication d'un chocolat selon l'invention caractérisé en ce que 1 à 20 % en poids de poudre de fruits ayant un D₉₀ inférieur à 500 µm et une teneur en eau inférieure à 5 % en poids est ajouté au chocolat ou analogue contenant la matière grasse, l'agent sucrant et éventuellement du cacao sec non gras, la température de mélange et de stockage ne dépassant pas 55°C pendant plus de 30 minutes, avantageusement ne dépassant pas 45°C pendant plus de 30 minutes. De préférence, tout le procédé de fabrication et le stockage sont à moins de 55°C, avantageusement à moins de 45°C. Ceci permet de préserver la couleur et l'arôme des fruits et d'autre part de limiter les agrégats (grumeaux) qu'il faut ensuite tamiser ou rebroyer. Si la poudre de fruits est assez fine, elle est ajoutée après les étapes de broyage des autres ingrédients. De préférence, la poudre de fruit a une teneur en eau inférieure à 3,5%, avantageusement inférieure à 2%. Les poudres de fruits étant très hygroscopiques, il convient de prendre les précautions pour éviter leur réhydratation (stockage court après ouverture, humidité relative de l'air réduite...). Dans un autre procédé avantageux de fabrication du chocolat selon la présente invention, des fruits entiers ou de gros morceaux de fruits ayant la teneur en eau de la poudre de fruits selon la présente invention sont ajoutés dans le chocolat puis broyés pendant le procédé de fabrication du chocolat selon l'invention de façon à obtenir le D₉₀ désiré. Avantageusement, une partie de la lécithine est ajoutée avant ce broyage.

Avantageusement, dans le cadre des procédés de fabrication selon la présente invention, les fruits utilisés sont des fruits lyophilisés.

La présente invention concerne en outre l'utilisation du chocolat selon la présente invention pour l'enrobage total ou partiel de biscuits, bouchées, barres de confiserie, barres céréalières, pâtisseries, crèmes glacées, sorbets ou assimilés, bouchées fraîches ou barres fraîches, lesdites bouchées fraîches ou barres fraîches contenant un fourrage ayant une Aw comprise entre 0,78 et 0,96, de préférence entre 0,8 et 0,93, avantageusement entre 0,88 et 0,92.

Au sens de la présente invention, on entend par « barres » tout produit "solide" mangé normalement à la main (sans cuillère), et ayant la forme d'une barre (croqué en plusieurs fois).

Avantageusement le fourrage des bouchées fraîches ou barres fraîches contient des ferments vivants tels que par exemple du *Lactobacillus bulgaricus,* du *Streptococcus thermophilus* et/ou du *Lactobacillus acidophilus* et/ou *bifidus,* de préférence apportés par un vrai yoghourt ou équivalent (et non par ensemencement direct des ferments concentrés). De préférence, ledit fourrage des bouchées fraîches ou barres fraîches contenant des ferments vivants a une Aw comprise entre 0,87 et 0,96.

De façon avantageuse, l'Aw du fourrage des barres fraîches ou bouchées fraîches est comprise entre 0,88 et 0,92, le chocolat selon l'invention ayant une teneur en matière grasse comprise entre 30 et 38 % en poids par rapport au poids total du chocolat, avantageusement entre 32 et 38 % en poids par rapport au poids total du chocolat, de façon avantageuse entre 35 et 38% en poids par rapport au poids total du chocolat et contenant en outre au moins un colorant non hydrosoluble, tel que par exemple le rouge de cochenille E120.

La présente invention concerne de plus l'utilisation du chocolat selon l'invention au contact d'un milieu alimentaire humide ayant une Aw supérieure à 0,88, caractérisée en ce que le chocolat selon l'invention contient en outre au moins un colorant, avantageusement non hydrosoluble, et que sa teneur en matière grasse est comprise entre 32 et 50 % en poids par rapport au poids total du chocolat, avantageusement entre 32 et 45% en poids par rapport au poids total du chocolat, de façon avantageuse entre 32 et 38% en poids par rapport au poids total du chocolat, de façon encore plus avantageuse entre 35 et 38% en poids par rapport au poids total du chocolat.

La présente invention concerne enfin l'utilisation du chocolat selon l'invention au contact d'un milieu alimentaire humide dont l'Aw est inférieure ou égale à 0,88, avantageusement inférieure ou égale à 0,85, caractérisée en ce que le chocolat selon l'invention a une teneur en matière grasse comprise entre 28 et 38 % en poids par rapport au poids total du chocolat, avantageusement entre 30 et 35% en poids par rapport au poids total du chocolat, de façon avantageuse entre 30 et 33% en poids par rapport au poids total du chocolat. Avantageusement, dans ce cas, le chocolat ou analogue ne contient pas de colorant artificiel.

Les exemples suivant illustrent l'invention et en particulier les procédés de préparation et les utilisations du chocolat selon l'invention.

### EXEMPLES 1 : BOTTOMMAGE DE BISCUITS AVEC UN ANALOGUE DE CHOCOLAT BLANC A LA FRAISE SELON L'INVENTION

On réalise un analogue de chocolat blanc à la fraise selon l'invention à l'aide des ingrédients rassemblés dans le tableau 1 suivant:

**Tableau 1: liste des ingrédients et proportions (% en poids)**

| **Ingrédients** | **%** |
|---|---|
| Beurre de cacao | 27,0 |
| MGLA | 3,5 |
| Lécithine | 0,3 |
| PGPR | QS |
| Saccharose | 30 |
| Amidon natif de blé non gélatinisé | 14 |
| contenant 13% d'eau | |
| Poudre de lait écrémé | 20,0 |
| Fraises lyophilisées à 1,5% d'eau | 5,15 |
| Vanilline en poudre | 0,05 |
| Total | 100 |

### Analyse nutritionnelle :

- MG : 31,0% (hors PGPR)
- Agents sucrants : 43,6 %
   dont sucres ajoutés (non inclus dans les ingrédients non raffinés, comme les fruits et le lait) : 30%
- Amidon sec : 12,2%
- Equivalent fruits 50%
- Dérivés laitiers en poudre : 20,0%

Le procédé de fabrication de cet analogue du chocolat selon l'invention est standard :
- broyage à 33 µm (mesuré au micromètre de marque Tesa, référence Tesamaster 03.10001, Suisse) sur broyeuse à cylindres (classique pour le chocolatier), en présence d'une partie de la lécithine et d'une partie de la MG
- puis un conchage court à moins de 45°C pour préserver l'arôme de fraises. Stockage à 37°C. Ajout du solde de MG et émulsifiants au début, en cours et/ou à la fin du conchage selon la nature de l'équipement de conchage utilisé (classique pour le chocolatier)
- Le chocolatier pourra adapter la limite d'écoulement par ajout de PGPR (0 à 0,35%).

Cet analogue du chocolat est tempéré puis utilisé en substitut de chocolat dans des biscuits bottomés (1 face recouverte de chocolat, l'autre libre), comme le Pépito classique (non moulé) de Lu. Ce procédé est très classique pour le biscuitier.

### EXEMPLE 2: BISCUIT AVEC COQUE MOULEES DE CHOCOLAT BLANC A LA FRAMBOISE SELON L'INVENTION

On réalise le chocolat blanc à la framboise selon l'invention à l'aide des ingrédients rassemblés dans le tableau 2 suivant:

**Tableau 2: liste des ingrédients et proportions (% en poids)**

| **Ingrédients** | **%** |
|---|---|
| Beurre de cacao | 29,8 |
| MGLA | 3,0 |
| Lécithine | 0,35 |
| PGPR (indicatif) | 0,15 |
| Saccharose | 34,5 |
| Lactosérum en poudre (11% protéines) | 5 |
| Amidon natif de blé non gélatinisé | 0 |
| contenant 13% d'eau | |
| Poudre de lait écrémé | 22,0 |
| Framboises lyophilisées à 1,5% d'eau | 5,15 |
| Vanilline en poudre | 0,05 |
| Total | 100 |

### Analyse nutritionnelle :

- MG:33,5%
- Agents sucrants : 51,8 %
   dont sucres ajoutés (non inclus dans les ingrédients non raffinés, comme les fruits et le lait) : 34,5%
- Amidon sec : 0%
- Equivalent fruits : - 30%
- Dérivés laitiers en poudre : 27,0%

Le procédé de fabrication de ce chocolat selon l'invention est standard : broyage à 30 µm (mesuré au micromètre) sur broyeuse à cylindres en présence d'une partie de la lécithine et d'une partie de la MG (classique pour le chocolatier), avec un conchage court à moins de 45°C pour préserver l'arôme de fruit. Stockage à 37°C. Le chocolatier adaptera la limite d'écoulement aux besoins du procédé de moulage en adaptant le taux de PGPR (0 à 0,5%).

Ce chocolat selon l'invention est utilisé en substitut de chocolat classique dans des biscuits de type Pims : tempérage, puis moulage d'une coque de chocolat ronde sur une mouleuse Frozen Cone (Aasted, DK- 3520 Farum) ; refroidissement puis remplissage de la coque avec une confiture, réchauffage des bords de chocolat, dépose d'une génoise ronde et refroidissement final. La génoise est alors collée à la coque chocolat et emprisonne le fourrage de confiture.

### EXEMPLE 3 : ENROBAGE DE FRUITS SECHES AVEC UN ANALOGUE DE CHOCOLAT AUX FRUITS ET AU YOGHOURT SELON L'INVENTION

On réalise l'analogue de chocolat blanc à la fraise et au yoghourt selon l'invention à l'aide des ingrédients rassemblés dans le tableau 3 suivant:

**Tableau 3: liste des ingrédients et proportions (% en poids)**

| **Ingrédients** | **%** |
|---|---|
| Beurre de cacao | 25,5 |
| MGLA | 3,5 |
| Lécithine | 0,35 |
| Saccharose | 25 |
| Amidon natif de blé non gélatinisé contenant | 18,95 |
| 13% d'eau | |
| Poudre de yoghourt écrémé (0,5% MG) | 21,5 |
| contenant des ferments vivants: 5^{E}8 ufc /g | |
| Fraises lyophilisées à 1,5% d'eau | 5,15 |
| Vanilline en poudre | 0,05 |
| Total | 100 |

### Analyse nutritionnelle :

- MG: 29,65%
- Agents sucrants : 41,34 %
   dont sucres ajoutés (non inclus dans les ingrédients non raffinés, comme les fruits et le lait) : 25%
- Amidon sec : 16,5%
- Equivalent fruits : 50%
- Dérivés laitiers en poudre : 21,5%

Le procédé de fabrication de cet analogue du chocolat selon l'invention est standard: broyage à 35µm (mesuré au micromètre) sur broyeuse à cylindres en présence d'une partie de la lécithine et d'une partie de la MG (classique pour le chocolatier), avec un conchage court à moins de 45°C pour préserver l'arôme de fraises. Stockage à 37°C.

On confectionne des billes de raisins secs (Aw 0,58) à partir de raisins secs écrasés.

Ces billes sont enrobées avec 40% de l'analogue de chocolat blanc selon l'invention fabriqué ci-dessus, sans tempérage (procédé de dragéification de chocolat, bien connu du confiseur - chocolatier). Les produits se conservent alors 1 mois à +4°C en conservant plus de 10^{E}7 ufc /g de ferments vivants.

### EXEMPLE 4 : PATE A GLACER AU LAIT ET AUX FRUITS POUR UNE BARRE FRAICHE D'AW 0.90

On réalise l'analogue de chocolat blanc à la fraise (pâte à glacer) selon l'intention à l'aide des ingrédients rassemblés dans le tableau 4 suivant:

**Tableau 4: liste des ingrédients et proportions (% en poids)**

| **Ingrédients** | **%** |
|---|---|
| Huile de Coprah hydrogéné 30-32°C | 38 |
| Lécithine | 0,35 |
| Saccharose | 15,5 |
| Amidon natif de blé non gélatinisé | 14,18 |
| contenant 13% d'eau | |
| Poudre de lait écrémé | 21 |
| Fraises lyophilisées à 1,5% d'eau | 5,15 |
| Colorant Rouge de cochenille E 120 | 0,02 |
| Citrate de tri-Calcium tétrahydrate CAS | 5,8 |
| 5785-44-4 | |
| Total | 100 |

### Analyse nutritionnelle :

- MG: 38,55%
- Agents sucrants : 29,6 % dont sucres ajoutés (non inclus dans les ingrédients non raffinés, comme les fruits et le lait) : 15,5%
- Amidon sec : 12,3%
- Equivalent fruits : 50%
- Dérivés laitiers en poudre : 21%
- Calcium : 1,5% (soit 12,5 fois plus que le lait)

Le procédé de fabrication de cet analogue du chocolat selon l'invention est standard: broyage à 35µm (mesuré au micromètre) sur broyeuse à cylindres en présence d'une partie de la lécithine et d'une partie de la MG (classique pour le chocolatier), avec un conchage court à moins de 45°C pour préserver l'arôme de fraises. Le solde de MG et de lécithine est ajouté en fin de conchage, puis le produit est stocké à 38°C.

On prépare le fourrage en 3 étapes :

### 1. Préparation d'un yoghourt

Les proportions et ingrédients sont rassemblés dans le tableau 5 suivant :

**Tableau 5: liste des ingrédients et proportions (% en poids) de la préparation de yaourt**

| | |
|---|---|
| lait écrémé | 51 à 51,5 % |
| crème à 40 % de matière grasse | 29 à 31 % |
| concentré de protéines de lait NZMP4861 (Fronterra) | 7 à 8 % |
| lactose | 11 à 12 % |
| ferments lactiques (par exemple de type ferments | 0,03 % |
| 542011 (CHR Hansen)) | |

La réhydratation de la formule se fait à 40°C pour bien dissoudre le lactose.

### Procédé de fabrication du yoghourt :

1- pasteurisation à 95°C pendant 6 minutes, et homogénéisation à 200 bars;
2- fermentation jusqu'à l'obtention d'un pH de 4,8;
3- lissage à l'aide d'un lisseur dynamique IKA® LABOR-PILOT 2000/4 (Werke-GmbH & Co.KG) constitué d'un étage avec 3 couronnes à 4 000 t/mn., afin d'obtenir une texture lisse, sans grains et brillante;
4- refroidissement à 4°C.

Le yoghourt ainsi obtenu présente les caractéristiques suivantes : 36,5% d'extrait sec, 12% de matière grasse, et 8,4% de protéines.

### 2. Préparation d'une combinaison de poudres

On réalise un pré-mélange des poudres dont les proportions sont indiquées dans le tableau 6 suivant :

**Tableau 6: liste des ingrédients et proportions (% en poids) du prémélange de poudre**

| **Ingrédient** | **Origine** | **%** |
|---|---|---|
| sirop de glucose déshydraté C*Sperse01934 | Cerestar | 34 |
| poudre de yoghourt M/A pH 5,4 | Dr. Suwelack | 29 |
| sirop de glucose liquide C*SweetM01656 | Cerestar | 20 |
| poudre de yoghourt A pH 4,3 | Dr. Suwelack | 10 |
| sucre glace amylosé | | 6,5 |
| arôme yoghourt 630455H | Givaudan | 0,5 |

### 3. Préparation du produit laitier fermenté prêt à inclure dans la barre:

On réalise un mélange 50/50 du yoghourt et de la combinaison de poudres avec un batteur planétaire, à la vitesse maximum, pendant 20 minutes, à froid.

Le produit laitier obtenu présente une activité de l'eau (Aw) à 20°C de 0,9 ± 0,01 mesurée avec un Aw-mètre AquaLab® (Decagon Devices, Inc.), et un pH de 4,8 ± 0,05 ; il comprend pour 100g : 10,9 g de protéines, 6,2 g de matière grasse, 47,6 g de carbohydrates et 327 mg de calcium, et a une valeur énergétique de 290 kCal/100g. Il contient > 10⁸ ferments vivants /g.

### On fabrique la barre fraîche comme suit :

1. Après refroidissement à 38°C, l'analogue de chocolat selon l'invention fabriqué ci-dessus est moulé (par Frozen Cone Aasted) en coque creuse en forme de barre, qui est refroidie à 10°C. L'épaisseur de l'analogue de chocolat est 1,3 mm.
2. Dépose du fourrage à 10°C et tapotage pour aplanir la surface.
3. Dépose immédiatement du talon en analogue de chocolat selon l'invention. Refroidissement final et stockage à 4°C. L'analogue de chocolat représente 35% du poids de la barre, qui pèse 30 g.

### Evaluation à la DLC (Durée limite de conservation) :

Le produit se conserve 4 semaines au réfrigérateur: l'analogue de chocolat selon l'invention garde une apparence normale, sans décoloration et une texture normale.

Il n'y a pas de développement apparent de la flore d'altération (notamment levures / moisissures) et les ferments du fourrage sont toujours vivants (> 10⁸ ufc /g pour la somme s *thermophilus* et *1 bulgaricus).*

### EXEMPLE 5 : PATE A GLACER AU LAIT ET AUX FRUITS POUR UNE BARRE FRAICHE D'AW 0,86

On réalise l'analogue de chocolat blanc à la fraise (pâte à glacer) selon l'invention à l'aide des ingrédients rassemblés dans le tableau 7 suivant:

**Tableau 7: liste des ingrédients et proportions (% en poids):**

| **Ingrédients** | **%** |
|---|---|
| Huile de Coprah hydrogéné 30-32°C | 37,3 |
| Lécithine | 0,35 |
| Saccharose | 15,5 |
| Amidon natif de blé non gélatinisé | 15,85 |
| contenant 13% d'eau | |
| Poudre de lait écrémé | 18,0 |
| Fraises lyophilisées à 1,5% d'eau | 10,0 |
| Carbonate de calcium | 3 |
| Total | 100 |

La composition est proche de celle de l'exemple 4, mais 10% de fraise en poudre sont utilisées et il n'y a pas de colorant.

### Analyse nutritionnelle :

- MG : 38.0%
- Agents sucrants : 30,7 %
   dont sucres ajoutés (non inclus dans les ingrédients non raffinés, comme les fruits et le lait) : 15,5%
- Amidon sec : 13,8%
- Equivalent fruits : environ 100%
- Dérivés laitiers en poudre : 18%

Le procédé de fabrication de l'analogue est identique à celui de l'exemple 4.

On prépare le fourrage en 3 étapes :

### 1. Préparation d'un yoghourt (identique à celui de l'exemple 4) :

Les proportions et ingrédients sont rassemblés dans le tableau 8 suivant :

**Tableau 8: liste des ingrédients et proportions (% en poids) de la préparation de yaourt**

| | |
|---|---|
| lait écrémé | 51 à 51,5% |
| crème à 40 % de matière grasse | 29 à 31 % |
| concentré de protéines de lait NZMP4861 (Fronterra) | 7 à 8 % |
| lactose | 11 à 12% |
| ferments lactiques (par exemple de type ferments 542 011 (CHR Hansen)) | 0,03 % |

La réhydratation de la formule se fait à 40°C pour bien dissoudre le lactose.

### Procédé de fabrication du yoghourt :

1- pasteurisation à 95°C pendant 6 minutes, et homogénéisation à 200 bars ;
2- fermentation jusqu'à l'obtention d'un pH de 4,8;
3- lissage à l'aide d'un lisseur dynamique IKAⓇ LABOR-PILOT 2000/4 (Werke-GmbH & Co.KG) constitué d'un étage avec 3 couronnes à 4 000 t/mn., afin d'obtenir une texture lisse, sans grains et brillante;
4- refroidissement à 4°C.

Le yoghourt ainsi obtenu présente les caractéristiques suivantes : 36,5% d'extrait sec, 12% de matière grasse, et 8,4% de protéines.

### 2. Préparation d'une combinaison de poudres

On réalise un pré-mélange des poudres dont les proportions sont indiquées dans le tableau 9 suivant :

**Tableau 9: liste des ingrédients et proportions (% en poids) du prémélange de poudre**

| **Ingrédient** | **Origine** | **%** |
|---|---|---|
| Sirop de glucose déshydraté C*Sperse01934 | Cerestar | 46,68 |
| Poudre de yoghourt M/A pH 5,4 | Dr Suwelack | 25 |
| Sirop de glucose liquide C*SweetM01656 | Cerestar | 16,68 |
| Poudre de yoghourt A pH 4,3 | Dr Suwelack | 8,34 |
| Sucre glace amylosé | | 3,3 |
| Total | | 100 |

### 3. Préparation du produit laitier fermenté prêt à inclure dans la barre:

On réalise un mélange 40/60 du yoghourt et de la combinaison de poudres avec un batteur planétaire, à la vitesse maximum, pendant 20 minutes, à froid.

Le produit laitier obtenu présente une activité de l'eau (Aw) de 0,86 ± 0,01 mesurée à 20°C avec un Aw-mètre AquaLabⓇ (Decagon Devices, Inc.), et un pH de 4,8 ± 0,05 ;

**On fabrique la barre fraîche comme suit** (de façon identique à l'exemple 4) :
1. Après refroidissement à 38°C, l'analogue de chocolat selon l'invention fabriqué ci-dessus est moulé (par Frozen Cone Aasted) en coque creuse en forme de barre, qui est refroidie à 10°C. L'épaisseur de l'analogue de chocolat est 1,3 mm.
2. Dépose du fourrage à 10°C et tapotage pour aplanir la surface.
3. Dépose immédiatement du talon en analogue de chocolat selon l'invention. Refroidissement final à 4°C.

L'analogue de chocolat représente 35% du poids de la barre, qui pèse 30 g.

### Evaluation à la DLC (Durée limite de conservation) :

Le produit se conserve 4 semaines au réfrigérateur: l'analogue de chocolat selon l'invention garde une apparence normale, sans décoloration et une texture normale.

Il n'y a pas de développement apparent de la flore d'altération (notamment levures / moisissures).

## Revendications

1. Chocolat aux fruits ou analogue comprenant au moins un agent sucrant, moins de 3 % en poids de cacao sec non gras, avantageusement moins de 1% en poids, entre 24 et 50% en poids de matière grasse et entre1 et 20 % en poids d'une poudre due fruits, la poudre de fruits ayant un D₉₀ inférieur à 500 µm et une teneur en eau inférieure à 5 % en poids, avantageusement les fruits de la poudre de fruits étant sous une forme lyophilisée.

2. Chocolat aux fruits ou analogue selon la revendication 1, **caractérise en ce que** son Aw est inférieure à 0,60, avantageusement inférieure à 0,35.

3. Chocolat aux fruits ou analogue selon la revendication1 ou 2, **caractérisée en ce qu'**il contient en outre entre 1 et 40 % en poids d'amidon sec, avantageusement entre 13 et 22 % en poids.

4. Chocolat aux fruits ou analogue selon l'une quelconque des revendications précédentes, **caractérisé en ce qu'**il contient en outre une poudre de lait et/ou de dérivés laitiers à une teneur comprise entre 5 et 40 % en poids, avantageusement entre 15 et 30 % en poids.

5. Chocolat aux fruits ou analogues selon l'une quelconque des revendications 3 ou 4, **caractérise en ce que** la teneur en (poudre de lait + dérivés laitiers en poudre + amidon sec) est supérieure à 25 % en poids, avantageusement supérieure à 40 % en poids.

6. Chocolat aux fruits ou analogue selon l'une quelconque des revendications précédentes, **caractérisé en ce que** sa teneur en matière grasse est comprise entre 27 et 45 % en poids, avantageusement entre 27 et 38 % en poids.

7. Chocolat aux fruits ou analogue selon l'une quelconque des revendications précédentes, **caractérise en ce que** sa teneur en agent sucrant est comprise entre 1 et 55% en poids, avantageusement entre20 et 33 % en poids.

8. Chocolat aux fruits ou analogue selon l'une quelconque des revendications précédentes, **caractérisé en ce qu'**il contient en outre au moins un émulsifiant, avantageusement choisi parmi la lécithine, le PGPR ou le phosphatide d'ammonium.

9. Chocolat aux fruits ou analogue selon l'une quelconque des revendications précédentes, **caractérisé en ce qu'**il contient plus de 120 mg de calcium élément pour 100g de chocolat, avantageusement plus 400 mg pour 100g de chocolat et de préférence plus de 1000mg pour 100g de chocolat.

10. procédé de fabrication d'un chocolat aux fruits ou analogue selon l'une quelconque des revendications 1 à 9, **caractérisé en ce que** 1 à 20 % en poids de poudre de fruits ayant un D₉₀ inférieur à 500 µm et une teneur en eau inférieure à 5 % en poids est ajouté au chocolat ou analogue contenant la matière grasse, l'agent sucrant et éventuellement du cacao sec non gras, la température de mélange et de stockage ne dépassant pas 55°C pendant plus de 30 min, avantageusement ne dépassant pas 45°C pendant plus de 30 min, les fruits de la poudre de fruits étant avantageusement sous une forme lyophilisée,

11. Utilisation du chocolat aux fruits ou analogue selon l'une quelconque des revendications 1 à 9 pour l'enrobage total ou partiel de biscuits, bouchées, barres de confiserie, barres céréalières, pâtisseries, crèmes glacées, sorbets ou assimilés, bouchées fraîches ou barres fraîches, lesdites bouchées fraîches ou barres fraîches contenant un fourrage ayant une Aw comprise entre 0,78 et 0,96, avantageusement entre 0.8 et 0,933, et avantageusement contenant des ferments vivants.

12. Utilisation selon la revendication 11 **caractérisée en ce que** l'Aw du fourrage des barres fraîches ou bouchées fraîches est comprise entre 0,88 et 0,92, le chocolat aux fruits ou analogue ayant une teneur en matière grasse comprise entre 30 et 38 % en poids, avantageusement entre 32 et 38 % en poids, et contenant en outre au moins un colorant non hydrosoluble.

13. Utilisation selon la revendication 11 au contact d'un milieu alimentaire humide ayant une Aw supérieure à 0,88, **caractérisée en ce que** le chocolat aux fruits ou analogue contient en outre au moins un colorant, avantageusement le colorant étant non hydrosoluble, et que sa teneur en matière grasse est comprise entre 32 et 50 %en poids, avantageusement entre 32 et 38% en poids, et de préférence entre 35 et 38 % en poids.

14. utilisation selon la revendication 11 au contact d'un milieu alimentaire humide dont l'Aw est inférieure ou égale à 0,88, avantageusement inférieure ou égale à 0,85, **caractérisée en ce que** le chocolat aux fruits ou analogue a une teneur en matière grasse comprise entre 28 et 38% en poids, avantageusement entre 30 et 33 % en poids,

15. Utilisation selon la revendication 14, **caractérisée en ce que** le chocolat ou analogue ne contient pas de colorant considère comme additifs dans la législation européenne. Selon la directrice 94/36/CE du 30/6/94.

## Claims

1. Fruit-containing chocolate or the like comprising at least one sugaring agent, less than 3% by weight of non-fat dry cocoa, advantageously less than 1% by weight, between 24 and 50% by weight of fat and between 1 and 20% by weight of fruit powder, the fruit powder having a D₉₀ of less than 500µm and a water content less than 5% by weight, advantageously the fruits of the fruit powder being in a freeze-dried form.

2. Fruit-containing chocolate or the like according to claim 1, **characterized in that** its Aw is less than 0.60, advantageously less than 0.35.

3. Fruit-containing chocolate or the like according to claim 1 or 2, **characterized in that** it further contains between 1 and 40% by weight of dry starch, advantageously between 13 and 22% by weight.

4. Fruit-containing chocolate or the like according to any of the preceding claims, **characterized in that** it further contains a milk and/or dairy derivatives powder at a content of between 5 and 40% by weight, advantageously between 15 and 30% by weight.

5. Fruit-containing chocolate or the like according to any of claims 3 or 4, **characterized in that** the (milk powder + dairy derivatives as a powder + dry starch) content is above 25% by weight, advantageously above 40% by weight.

6. Fruit-containing chocolate or the like according to any of the preceding claims, **characterized in that** its fat content is between 27 and 45% by weight, advantageously between 27 and 38% by weight.

7. Fruit-containing chocolate or the like according to any of the preceding claims, **characterized in that** its sugaring agent content is between 1 and 55% by weight, advantageously between 20 and 33% by weight.

8. Fruit-containing chocolate or the like according to any of the preceding claims, **characterized in that** it further contains at least one emulsifier, advantageously selected from lecithin, PGPR or ammonium phosphatide.

9. Fruit-containing chocolate or the like according to any of the preceding claims, **characterized in that** contains more than 120 mg of elementary calcium per 100 g of chocolate, advantageously more than 400 mg per 100 g of chocolate and preferably more than 1,000 mg per 100 g of chocolate.

10. Method for making a fruit-containing chocolate or the like according to any of claims 1 to 9, **characterized in that** 1 to 20% by weight of fruit powder with a D₉₀ of less than 500µm and a water content of less than 5% by weight are added to the chocolate or the like containing the fat, the sugaring agent and optionally non-fat dry cocoa, the mixing and storage temperature not exceeding 55°C for more than 30 min, and advantageously not exceeding 45°C for more than 30 minutes, the fruit of the fruit powder being advantageously in a freeze-dried form.

11. Use of the fruit-containing chocolate or the like according to any of claims 1 to 9 for total or partial coating of biscuits, patties, candy bars, cereal bars, pastries, ice creams, sherbets, or the like, fresh patties or fresh bars, said fresh patties or fresh bars containing a filling having an Aw comprised between 0.78 and 0.96, advantageously between 0.8 and 0.93, and advantageously containing live ferments.

12. Use according to claim 11, **characterized in that** the Aw of the filling of fresh bars or fresh patties is comprised between 0.88 and 0.92, the fruit-containing chocolate or the like having a fat content of between 30 and 38% by weight, advantageously between 32 and 38% by weight, and containing at least one non-water-soluble coloring agent.

13. Use according to claim 11 in contact with a humid food medium, having an Aw greater than 0.88, **characterized in that** the fruit-containing chocolate or the like further contain at least one coloring agent, advantageously the coloring agent not being watersoluble, and that its fat content is comprised between 32 and 50% by weight, advantageously between 32 and 38% by weight, and preferably between 35 and 38% by weight.

14. Use according to claim 11 in contact with a humid food medium, the Aw of which is less than or equal to 0.88, advantageously less than or equal to 0.85, **characterized in that** the fruit-containing chocolate or the like has a fat content of between 28 and 38% by weight, advantageously between 30 and 33% by weight.

15. Use according to claim 14, **characterized in that** the chocolate or the like does not contain any coloring agent considered as additives in European legislation, in compliance with the directive 94/36/EC dated 30/06/94.

## Patentansprüche

1. Fruchtschokolade oder dergleichen umfassend wenigstens ein Süßungsmittel, weniger als 3 Gew.-%, vorteilhafterweise weniger als 1 Gew.-%, entölte Kakaotrockenmasse, zwischen 24 und 50 Gew.-% Fett und zwischen 1 und 20 Gew.-% eines Fruchtpulvers, wobei das Fruchtpulver einen D₉₀-Wert kleiner als 500 µm und einen Wassergehalt von weniger als 5 Gew.-% aufweist, wobei vorteilhafterweise die Früchte des Fruchtpulvers in gefriergetrockneter Form sind.

2. Fruchtschokolade oder dergleichen gemäß Anspruch 1, **dadurch gekennzeichnet, dass** ihr Aw-Wert kleiner als 0,60, vorteilhafterweise kleiner als 0,35 ist.

3. Fruchtschokolade oder dergleichen gemäß Anspruch 1 oder 2, **dadurch gekennzeichnet, dass** sie außerdem zwischen 1 und 40 Gew.-% Trockenstärke, vorteilhafterweise zwischen 13 und 22 Gew.-%, enthält.

4. Fruchtschokolade oder dergleichen gemäß einem der vorhergehenden Ansprüche, **dadurch gekennzeichnet, dass** sie außerdem ein Milchpulver und/oder ein Milchderivatpulver in einem Gehalt zwischen 5 und 40 Gew.-%, vorteilhafterweise zwischen 15 und 30 Gew.-%, enthält.

5. Fruchtschokolade oder dergleichen gemäß einem der Ansprüche 3 oder 4, **dadurch gekennzeichnet, dass** der Gehalt an (Milchpulver + Milchderivate + Trockenstärke) größer als 25 Gew.-%, vorteilhafterweise größer als 40 Gew.-%, ist.

6. Fruchtschokolade oder dergleichen gemäß einem der vorhergehenden Ansprüche, **dadurch gekennzeichnet, dass** ihr Fettgehalt zwischen 27 und 45 Gew.-%, vorteilhafterweise zwischen 27 und 38 Gew.%, ist.

7. Fruchtschokolade oder dergleichen gemäß einem der vorhergehenden Ansprüche, **dadurch gekennzeichnet, dass** ihr Gehalt an Süßungsmittel zwischen 1 und 55 Gew.-%, vorteilhafterweise zwischen 20 und 33 Gew.-%, ist.

8. Fruchtschokolade oder dergleichen gemäß einem der vorhergehenden Ansprüche, **dadurch gekennzeichnet, dass** sie außerdem einen Emulgator enthält, der vorteilhafterweise aus Lecithin, PGPR oder Ammoniumphosphatid gewählt ist.

9. Fruchtschokolade oder dergleichen gemäß einem der vorhergehenden Ansprüche, **dadurch gekennzeichnet, dass** sie mehr als 120 mg Kalziumelement für 100 g Schokolade, vorteilhafterweise mehr als 400 mg für 100 g Schokolade, und vorzugsweise mehr als 1000 mg für 100 g Schokolade enthält.

10. Verfahren zur Herstellung einer Fruchtschokolade oder dergleichen gemäß einem der Ansprüche 1 bis 9, **dadurch gekennzeichnet, dass** 1 bis 20 Gew.-% Fruchtpulver, das einen D₉₀-Wert kleiner als 500 µm und einen Wassergehalt weniger als 5 Gew.-% aufweist, der Schokolade oder dergleichen hinzugefügt wird, die das Fett, das Süßungsmittel und möglicherweise entölte Trockenkakaomasse enthält, wobei die Misch- und Lagerungstemperatur nicht 55°C während mehr als 30 Minuten übersteigt, vorteilhafterweise nicht 45°C während mehr als 30 Minuten übersteigt, wobei die Früchte des Fruchtpulvers vorteilhafterweise in gefriergetrockneter Form sind.

11. Verwendung der Fruchtschokolade oder dergleichen gemäß einem der Ansprüche 1 bis 9 zur vollkommenen oder teilweisen Ummantelung von Keksen, Pralinen, Süßwarenriegeln, Getreideriegeln, Backwaren, Speiseeis, Sorbets oder ähnlichem, frischen Happen oder frischen Riegeln, wobei die frischen Happen oder frischen Riegel eine Füllung enthalten, die einen Aw-Wert zwischen 0,78 und 0,96, vorteilhafterweise zwischen 0,8 und 0,93, aufweist, und vorteilhafterweise lebende Fermente enthält.

12. Verwendung gemäß Anspruch 11, **dadurch gekennzeichnet, dass** der Aw-Wert der Füllung der frischen Riegeln oder der frischen Happen zwischen 0,88 und 0,92 ist, wobei die Fruchtschokolade oder dergleichen einen Fettgehalt zwischen 30 und 38 Gew.-%, vorteilhafterweise zwischen 32 Gew.-% und 38 Gew.-%, aufweist und außerdem wenigstens einen nicht wasserlöslichen Farbstoff enthält.

13. Verwendung gemäß Anspruch 11 in Kontakt mit einem feuchten Nahrungsmilieu, das einen Aw-Wert größer als 0,88 aufweist, **dadurch gekennzeichnet, dass** die Fruchtschokolade oder dergleichen außerdem wenigstens einen Farbstoff enthält, wobei der Farbstoff vorteilhafterweise nicht wasserlöslich ist, und dass sein Fettgehalt zwischen 32 und 50 Gew.-% ist, vorteilhafterweise zwischen 32 Gew.-% und 38 Gew.-%, und vorzugsweise zwischen 35 und 38 Gew.-%.

14. Verwendung gemäß Anspruch 11 in Kontakt mit einem feuchten Nahrungsmilieu, dessen Aw-Wert kleiner oder gleich 0,88, vorteilhafterweise kleiner oder gleich 0,85, ist, **dadurch gekennzeichnet, dass** die Fruchtschokolade oder dergleichen einen Fettgehalt zwischen 28 und 38 Gew.-%, vorteilhafterweise zwischen 30 und 33 Gew.-%, aufweist.

15. Verwendung gemäß Anspruch 14, **dadurch gekennzeichnet, dass** die Schokolade oder dergleichen keinen Farbstoff enthält, der als Zusatzstoff in der europäischen Gesetzgebung gemäß der Richtlinie 94/36/CE vom 30/6/94 aufgefasst wird.
